# FASCICULE DE BREVET EUROPEEN

(11) **EP 0 704 334 B1**
(45) Date de publication et mention de la délivrance du brevet: **18.11.1998**
(21) Numéro de dépôt: 95420264.4
(22) Date de dépôt: 22.09.1995
(51) Int. Cl.: B60K 20/02, G05G 1/06

(54) **Dispositif de fixation d'un pommeau de levier de commande de boîte de vitesses pour véhicles automobiles**
Befestigungsvorrichtung für den Schalthebelknauf für ein Kraftfahrzeugschaltgetriebe
Fixing device for a knob of a gear shift lever for a motor vehicle gear box

(30) Priorité: 30.09.1994 FR 9412026
(43) Date de publication de la demande: 03.04.1996
(73) Titulaire: ADWEST OCI SA, 42350 La Talaudière (FR)
(72) Inventeur: Tholly, Paul, F-42170 Saint Just Saint Rambert (FR)
(74) Mandataire: Thivillier, Patrick

(56) Documents cités:
- EP-A- 0 083 021
- EP-A- 0 404 613
- DE-U- 9 202 010
- US-A- 4 492 129

## Description

L'invention se rattache au secteur technique des équipements pour véhicules automobiles.

Plus particulièrement, l'invention concerne le levier de commande agissant par l'intermédiaire d'un système de barre ou de câbles sur des éléments de passage et de sélection de la boîte de vitesses. Ces leviers sont actionnés par l'intermédiaire d'un pommeau fixé d'une manière démontable, en bout dudit levier. Différentes solutions existent pour assurer cette fixation.

Par exemple, le pommeau est emmanché sur une déformation faite en bout du levier, lors de son usinage. La déformation s'effectue au moyen d'une molette, pour constituer plusieurs nervures. Sur ces nervures, sont réalisés, des crans de retenue. Le levier en tant que tel, est exécuté au moyen d'un tube.

Cette solution n'est pas satisfaisante et est d'un coût de revient élevé, compte-tenu des opérations d'usinage qu'il convient d'effectuer en bout du tube.

En outre, le montage du pommeau sur l'extrémité du tube ainsi agencée, pose certains problèmes. Les pommeaux sont généralement montés à la main et nécessitent un certain effort de poussée, pour être correctement emmanchés. Il est très difficile de voir si le pommeau est suffisamment emmanché, en vue de sa tenue efficace dans le temps.

Par ailleurs, la médecine du travail préconise d'exercer un effort qui ne doit pas être supérieur à une valeur déterminée. Or, il s'est avéré que cette valeur n'est pas suffisante pour obtenir un emmanchement efficace.

Enfin, on note que la réalisation du levier sous forme d'un tube, est d'un coût de revient plus important qu'une tige pleine par exemple, et génère certaines vibrations.

L'invention s'est fixée pour but de remédier à ces inconvénients, de manière simple, sûre, efficace et rationnelle.

Le problème que se propose de résoudre l'invention, est de simplifier la fixation du pommeau en bout du levier, en ayant pour objectif de diminuer les coûts.

Pour résoudre un tel problème, il a été conçu et mis au point un dispositif de fixation sous forme d'une pièce en matière plastique rapportée par surmoulage en bout de la partie supérieure du levier, ladite pièce présentant des agencements de fixation aptes à assurer l'emmanchement du pommeau et son démontage.

Pour résoudre le problème de diminuer les vibrations en augmentant le moment d'inertie, tout en ayant pour objectif de diminuer les coûts, le levier est de section pleine, notamment ronde.

Pour résoudre le problème posé de diminuer les coûts en rationnalisant la fabrication, la pièce est rapportée par surmoulage en bout du levier en combinaison avec des moyens de retenu et d'ancrage.

Pour résoudre le problème posé de permettre le surmoulage de la pièce de fixation, les moyens de retenu et d'ancrage sont constitués par un moletage formé sur une partie cylindrique de diamètre inférieur à celui du levier.

Pour résoudre le problème posé d'assurer la fixation du pommeau sur la pièce rapportée, dans une première forme de réalisation, les agencements sont constitués par des nervures rectilignes formées en débordement de la portée de liaison et parallèlement à ses génératrices, lesdites nervures présentant un système de crantage.

Dans une autre forme de réalisation, en ayant pour objectif de respecter les conditions de travail préconisées, les agencements sont aptes à assurer l'emmanchement du pommeau avec un effort d'introduction faible et un effort de retrait important.

Dans ce but, les agencements sont constitués par des portées coniques coopérant avec des empreintes complémentaires formées dans l'alésage du pommeau, lesdites portées et empreintes étant raccordées respectivement à la pièce de liaison et au pommeau par des pentes de retenue.

Avantageusement, la pièce est réalisée en polyamide 6-6 chargé de fibres de verre.

L'invention est exposée, ci-après plus en détail à l'aide des dessins annexés, dans lesquels :

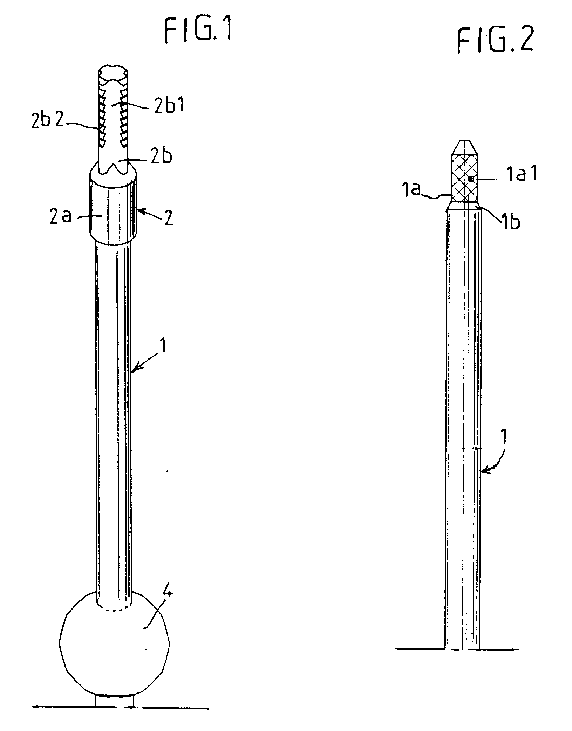

La figure 1 est une vue en perspective de l'extrémité d'un levier de commande de la boîte de vitesses, équipée du dispositif selon l'invention.
La figure 2 est une vue externe de l'extrémité du levier avant surmoulage de la pièce de fixation.
La figure 3 est une vue en coupe de l'extrémité du levier, agencée selon les caractéristiques de l'invention. et équipée d'un pommeau.
La figure 4 est une vue extérieure correspondant à la figure 2.
La figure 5 est une vue en coupe de l'extrémité du levier, agencée selon les caractéristiques de l'invention, dans une autre forme de réalisation.
La figure 6 est, à une échelle plus importante, une vue en coupe transversale considérée selon la ligne 6.6 de la figure 5.

Selon l'invention, le corps du levier (1) est de section transversale pleine, notamment de section ronde. Selon une caractéristique à la base de l'invention, l'extrémité (1a) du levier (1) est agencée pour recevoir, par surmoulage, une pièce en matière plastique (2), conformée pour permettre l'emmanchement d'un pommeau (3).

L'extrémité (1a) du levier (1) présente des moyens de retenue et d'ancrage, tels que par exemple un moletage (1a1), pour permettre le surmoulage de la pièce (2) et sa solidarisation. Cette extrémité (1a) constitue une portée cylindrique, de diamètre inférieur au diamètre du corps du lever, en y étant raccordée par un chanfrein (1b).

La pièce (2) présente un fourreau tubulaire (2a) surmoulé sur la portée cylindrique (1a), en combinaison avec le chanfrein (1b). Le fourreau (2a) est prolongé par une portée (2b) présentant des agencements de fixation aptes à assurer la retenue du pommeau (3), tout en permettant son démontage.

Compte-tenu de cette conception, on peut envisager facilement, différentes formes de réalisation d'agencements de fixation, obtenus lors du surmoulage de la pièce (2).

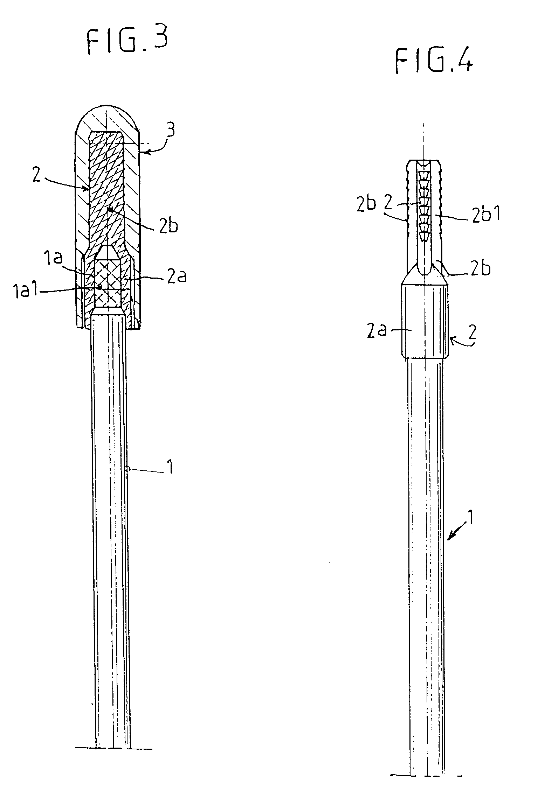

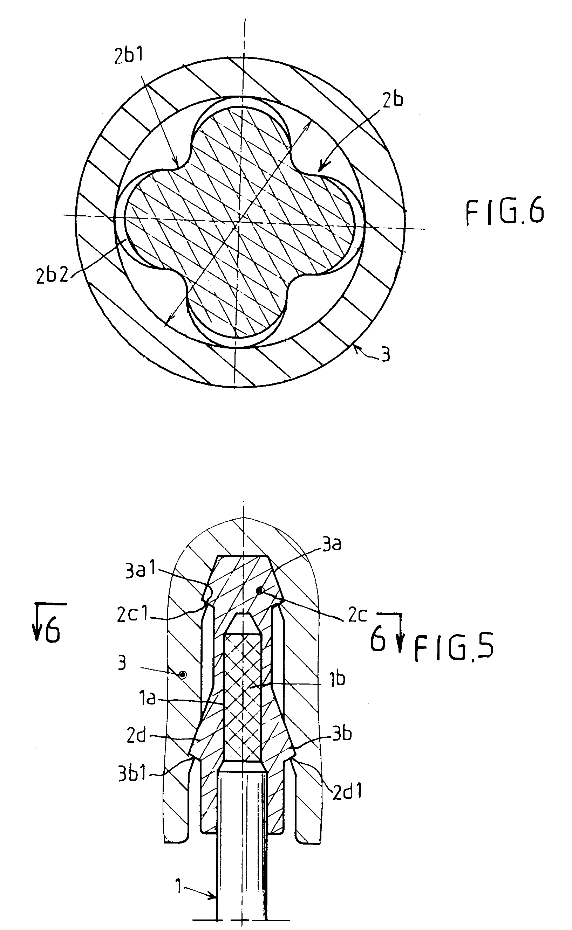

Par exemple, et comme le montrent les figures 3, 4 et 5, la portée cylindrique (2b) présente, par moulage, des nervures rectilignes (2b1) disposées parallèlement à ses génératrices. Chaque nervure présente un système de crantage (2b2). Avantageusement, les nervures (2b1) sont disposées en croix (figure 6).

Dans la forme de réalisation illustrée figure 5, la pièce (2) présente une série de portées coniques (2c) (2d), aptes à coopérer avec des empreintes complémentaires (3a) (3b) formées dans l'alésage du pommeau (3). Les portées (2c) et (2d) sont raccordées à la pièce (2), par des pentes de retenue (2c1) (2d1), lesquelles coopèrent avec des pentes complémentaires (3a1) (3b1) de raccordement avec les empreintes (3a) et (3b). Ces dispositions permettent d'assurer l'emmanchement du pommeau (3) avec un effort d'introduction faible, et son retrait avec un effort de traction important.

Avantageusement, mais non limitativement, l'ensemble de la pièce de fixation (2) est réalisé en polyamide 6-6 chargé en fibre de verre. De même, la pièce (2) peut être surmoulée simultanément avec la tête sphérique (4) qui équipe normalement le levier (1).

Les avantages ressortent bien de la description, en particulier on souligne et on rappelle :
- la diminution des coûts de fabrication, en supprimant les opérations d'usinage du levier, nécessaires à l'accrochage du levier,
- la fixation du pommeau sur une pièce surmoulée en bout du levier, permettant d'avoir des formes d'accouplement diverses,
- la possibilité de pouvoir facilement exécuter la pièce surmoulée de liaison, avec des agencements permettant d'assurer l'emmanchement du pommeau avec un effort d'introduction faible et un effort de retrait important,
- la section pleine du corps du levier, permettant une meilleure absorbtion des vibrations,
- l'efficacité des résultats obtenus,
- la qualité de fabrication, en respectant scrupuleusement les tolérances.

## Revendications

1. Dispositif de fixation d'un pommeau de levier de commande de boites de vitesses pour véhicules automobiles, caractérisé en ce qu'il comprend une pièce en matière plastique (2) rapportée par surmoulage en bout de la partie supérieure (1a) du levier (1), ladite pièce (2) présentant des agencements de fixation aptes à assurer l'emmanchement du pommeau (3) et son démontage.

2. Dispositif selon la revendication 1, caractérisé en ce que le levier (1) est de section pleine, notamment ronde.

3. Dispositif selon la revendication 1, caractérisé en ce que la pièce (2) est rapportée par surmoulage en bout du levier en combinaison avec des moyens de retenu et d'ancrage (1a1).

4. Dispositif selon la revendication 3, caractérisé en ce que les moyens de retenu et d'ancrage sont constitués par un moletage(1a1) formé sur une portée cylindrique (1a) de diamètre inférieur à celui du levier (1).

5. Dispositif selon la revendication 1, caractérisé en ce que la pièce (2) présente un fourreau tubulaire (2a) apte à être surmoulé en bout du levier (1), ledit fourreau étant prolongé par une portée (2b) présentant les agencements de fixation avec le pommeau.

6. Dispositif selon la revendication 5, caractérisé en ce que les agencements sont constitués par des nervures rectilignes (2b1) formées en débordement de la portée de liaison (2a) et parallèlement à ses génératrices, lesdites nervures (2b1) présentant un système de crantage (2b2).

7. Dispositif selon la revendication 5, caractérisé en ce que les agencements sont aptes à assurer l'emmanchement du pommeau (3) avec un effort d'introduction faible et un effort de retrait important.

8. Dispositif selon la revendication 7, caractérisé en ce que les agencements sont constitués par des portées coniques (2c) (2d) coopérant avec des empreintes complémentaires (3a) (3b) formées dans l'alésage du pommeau (3), lesdites portées et empreintes étant raccordées respectivement à la pièce de liaison et au pommeau par des pentes de retenue (2c1, 2d1, 3a1, 3b1).

9. Dispositif selon la revendication 6, caractérisé en ce que les nervures (2b1) sont disposées en croix.

10. Dispositif selon la revendication 1, caractérisé en ce que la pièce (2) est réalisée en polyamide 6-6 chargé de fibre de verre.

11. Dispositif selon la revendication 1, caractérisé en ce que la pièce (2) est surmoulée simultanément avec une tête sphérique d'articulation (4) qui équipe le levier (1).

## Claims

1. Device for fixing a knob for a motor vehicle gear stick, characterised in that it comprises a part made of plastic (2) moulded onto the tip of the upper part (1a) of stick (1), said part (2) having fixing features capable of ensuring that the knob (3) can be fitted by pushing it on and be removed.

2. Device as claimed in claim 1, characterised in that stick (1) has a solid, especially a round, cross section.

3. Device as claimed in claim 1, characterised in that part (2) is separately mounted by moulding it onto the tip of the stick in combination with means of retention and anchoring (1a1).

4. Device as claimed in claim 3, characterised in that the means of retention and anchoring consist of knurling (1a1) formed over a cylindrical bearing surface (1a) having a diameter less than that of the stick (1).

5. Device as claimed in claim 1, characterised in that part (2) has a tubular lining (2a) capable of being moulded onto the tip of stick (1), said lining extending as a bearing surface (2b) having features for fixing to the knob.

6. Device as claimed in claim 5, characterised in that the features consist of straight ribs (2b1) formed so that they protrude from connecting bearing surface (2a) and are parallel to its generating lines, said ribs (2b1) having a serration system (2b2).

7. Device as claimed in claim 1, characterised in that the features are capable of ensuring that the knob (3) can be push fitted by exerting a slight insertion force but can only be removed by exerting a considerable withdrawal force.

8. Device as claimed in claim 7, characterised in that the features consist of tapered bearing surfaces (2c) (2d) that cooperate with matching recesses (3a) (3b) formed in the bore of the knob (3), said bearing surfaces and recesses being connected respectively to the connecting part and the knob by sloping retention surfaces (2c1, 2d1, 3a1, 3b1).

9. Device as claimed in claim 6, characterised in that the ribs (2b1) are arranged in a crosswise configuration.

10. Device as claimed in claim 1, characterised in that part (2) is made of polyamide 6-6 with fibreglass reinforcement.

11. Device as claimed in claim 1, characterised in that part (2) is moulded on at the same time as a ball joint (4) that is fitted on stick (1).

## Patentansprüche

1. Vorrichtung zur Befestigung eines Knaufs für den Bedienungshebel von Gangzchaltungen für Kraftfahrzeuge, dadurch gekennzeichnet, daß die Vorrichtung ein Kunststoffteil (2) umfaßt, das am Ende des oberen Teils (1a) des Hebels (1) durch Umspritzen angefügt wird, wobei das Teil (2) Befestigungsvorkehrungen aufweist, die geeignet sind, das Aufsetzen und das Abnehmen des Knaufs (3) zu gewährleisten.

2. Vorrichtung nach Anspruch 1, dadurch gekennzeichnet, daß der Hebel (1) einen vollen, insbesondere runden Querschnitt besitzt.

3. Vorrichtung nach Anspruch 1, dadurch gekennzeichnet, daß das Teil (2) in Verbindung mit Rückhalte- und Verankerungsvorkehrungen (1a1) am Hebelende durch Umspritzen angefügt wird.

4. Vorrichtung nach Anspruch 3, dadurch gekennzeichnet, daß die Rückhalte- und Verankerungsvorkehrungen aus einer Rändelung (1a1) bestehen, die auf einer zylindrischen Auflagefläche (1a) ausgebildet ist, deren Durchmesser geringer ist als derjenige des Hebels (1).

5. Vorrichtung nach Anspruch 1, dadurch gekennzeichnet, daß das Teil (2) eine rohrförmige Hülse (2a) aufweist, die für das Umspritzen am Ende des Hebels (1) geeignet ist, wobei die Hülse durch eine Auflagefläche (2b) verlängert wird, die die Vorkehrungen für die Befestigung mit dem Knauf aufweist.

6. Vorrichtung nach Anspruch 5, dadurch gekennzeichnet, daß die Vorkehrungen aus geradlinigen Rippen (2b1) bestehen, die aus der verbindenden Auflagefläche (2a) vorstehen und parallel zu den Mantellinien verlaufen, wobei die Rippen (2b1) ein Zahnungssystem (2b2) aufweisen.

7. Vorrichtung nach Anspruch 5, dadurch gekennzeichnet, daß die Vorkehrungen geeignet sind, bei geringer Einführkraft und hoher Rückzugkraft das Aufstecken des Knaufs (3) zu gewährleisten.

8. Vorrichtung nach Anspruch 7, dadurch gekennzeichnet, daß die Vorkehrungen aus konischen Auflageflächen (2c) (2d) bestehen, die mit ergänzenden Vertiefungen (3a) (3b) in der Bohrung des Knaufs (3) zusammenwirken, wobei die Auflageflächen und Vertiefungen durch Rückhalteschrägen (2c1, 2d1, 3a1, 3b1) mit dem Verbindungsteil bzw. dem Knauf verbunden sind.

9. Vorrichtung nach Anspruch 6, dadurch gekennzeichnet, daß die Rippen (2b1) kreuzförmig angeordnet sind.

10. Vorrichtung nach Anspruch 1, dadurch gekennzeichnet, daß das Teil (2) aus glasfaserverstärktem Polyamid 6-6 besteht.

11. Vorrichtung nach Anspruch 1, dadurch gekennzeichnet, daß das Teil (2) gleichzeitig mit einem den Hebel (1) bestückenden Gelenkkugelkopf (4) umspritzt wird.
